# EUROPEAN PATENT APPLICATION

(11) **EP 1 296 419 A2**
(43) Date of publication of application: **26.03.2003**
(21) Application number: 02021259.3
(22) Date of filing: 19.09.2002
(51) Int. Cl.: H01R 13/703

(54) **Power supply cut system for vehicle**

(30) Priority: 21.09.2001 JP 2001289473; 27.12.2001 JP 2001397449
(71) Applicant: YAZAKI CORPORATION, Minato-ku Tokyo 108 (JP)
(72) Inventor: Kunugu, Masanori, c/o Yazaki Parts Co., Ltd., Shizuoka-ken (JP)
(74) Representative: HOFFMANN - EITLE

(57) **Abstract**

The present invention discloses a power supply cut system for a vehicles, which comprises power supply cutting means 13 including a power supply cutting portion 15 provided in a vehicular electric component circuit 1 on an upper stream than a connector connecting portion 4 toward a power supply to make the vehicular electric component circuit 1 non-conductive, and a control unit 14 for controlling the power supply cutting portion 15, and lock detecting means 12 as cut signal inputting means for entering a power supply cut signal to the control unit 14 in a connected or disconnected state of the connector connecting portion 4. When the lock detecting means detects the lock released state, the vehicle electric component circuit 1 is made non-conductive on the upper stream than the connector connecting portion 4 toward the power supply.

## Description

### BACKGROUND OF THE INVENTION

### Field of the Invention

The present invention relates to a power supply cut system for a vehicle, which cuts power during disconnection of a connector.

### Description of the Related Art

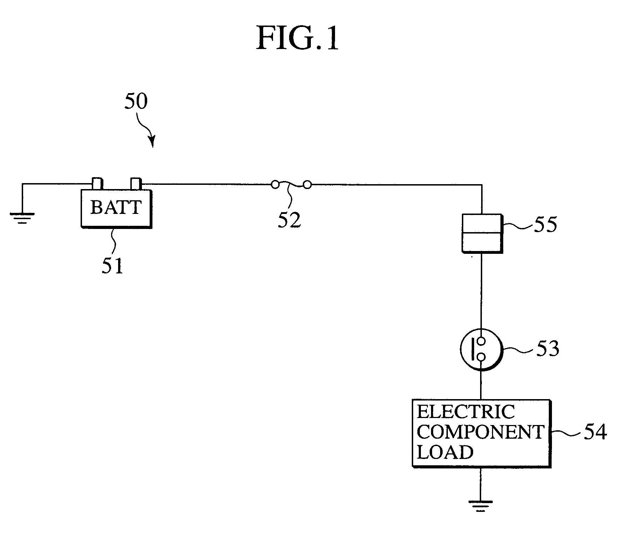

As shown in Fig. 1, for example, a vehicular electric component circuit 50 mainly includes a power supply 51 for supplying a predetermined power supply voltage, a fuse 52 for preventing conduction of an overcurrent, a switch 53 for driving an electric component load 54, and the electric component load 54 operated by a power supply voltage. A connector connecting portion 55 is provided as a main circuit component in a suitable place of the vehicular electric component circuit 50. That is, wiring between the power supply 51 and the electric component load 54 is carried out by wire harnesses, and connection between the wire harnesses is carried out by connector connection, which are most convenient in a vehicle line assembly, services and the like.

At present, the power supply 51 for an automobile is set at a low voltage of L4V, and almost no arc discharge occurs even if an inserting and pulling-out operation of the connector connecting portion 55 is carried out in a state of low-voltage application. Thus, in the conventional vehicular electric component circuit 50, a power supply cut system for a vehicle is not necessary, and none has been mounted.

### SUMMARY OF THE INVENTION

In recent years, however, there has been a progress in development of a high-voltage automobile of 42V. In such a high-voltage automobile, a voltage is three times larger than that of the current power supply (14V), and a probability of an arc discharge during a connector inserting and pulling-out operation is also three times larger. Consequently, countermeasures are essential for security and disaster prevention.

The present invention was made to solve the above-described problems, and an object of the present invention is to provide a power supply cut system for a vehicle capable of preventing occurrence of the arc discharge and an electric shock in handling of a connector connecting portion.

In accordance with a first aspect of the present invention, a power supply cut system for a vehicle is provided, which comprises power supply cutting means including a power supply cutting portion provided in a vehicular electric component circuit on an upper stream than a connector connecting portion toward a power supply to make the vehicular electric component circuit non-conductive, and power supply cut means composed of a control unit for controlling the power supply cutting portion, and cut signal inputting means for entering a power supply cut signal to the control unit in a connected or disconnected state of the connector connecting portion.

In the power supply cut system for a vehicle, to connect the connector connecting portion, the power supply cut signal is entered to the control unit by the cut signal inputting means. The control unit controls the power supply cutting portion to make the vehicular electric component circuit non-conductive. Also, to disconnect the connected connector connecting portion, the power supply cut signal is entered to the control unit by the cut signal inputting means, and the vehicular electric component circuit is made non-conductive by the power supply cutting means.

In accordance with a second aspect of the present invention, in the power supply cut system for a vehicle of the above first aspect, the connector connecting portion includes a locking portion, and lock detecting means provided to detect a locked or lock released state of the locking portion and, when the lock detecting means detects the lock released state, the power supply cutting means makes the vehicular electric component circuit non-conductive.

In the power supply cut system for a vehicle, when the locking portion is released in order to separate the fitted connector connecting portion, the vehicular electric component circuit is made non-conductive by the power supply cutting means, and no power supply voltages are applied to the connector connecting portion. In this state, a separating operation of the connector connecting portion is completely carried out. When a fitting operation of the connector connecting portion is carried out to fit the separated connector connecting portion, and the locking portion is locked, the vehicular electric component circuit is recovered to the conductive state by the power supply cutting means, and the power supply voltage is applied to the connector connecting portion.

In accordance with a third aspect of the present invention, in the power supply cut system for a vehicle of the above second aspect, a plurality of connector connecting purtions are provided, and at least one of the plurality of connector connecting portions includes the lock detecting means. When the lock detecting means detects the lock released state, the power supply cutting means makes the vehicular electric component circuit non-conductive on the upper stream than the connector connecting portion toward the power supply, and cuts off power supply to the other connector connecting portions.

In the power supply cut system for a vehicle, at least one of the plurality of connector connecting portions includes the lock detecting means. When the locking portion of this connector connecting portion is released, lock releasing information is outputted from the lock detecting means. The control unit controls the power supply cutting portion to make the vehicular electric component circuit non-conductive on the upper stream than the connector connecting portion toward the power supply, and cuts off power supply to the other connector connecting portions. As a result, no power supply voltages are applied to the other connector connecting portions and, in this state, a separating operation of the connector connecting portion is carried out. When the locking portion of the connector connecting portion having the lock detecting means is locked, locking information is outputted from the lock detecting means. The control unit controls the power supply cutting portion to recover the vehicular electric component circuit to the conductive state, and power supply voltages are applied to the other connector connecting portions.

In accordance with a fourth aspect of the present invention, in the power supply cut system for a vehicle of the above first aspect, the cut signal inputting means is a vehicular ignition key switch for entering the power supply cut signal outputted from a power supply cutting position to the control unit.

In the power supply cut system for a vehicle, when the vehicular ignition key switch as the cut signal inputting means is set in the power supply cutting position, for example in a battery-off position, the control unit controls the power supply cutting portion to make the vehicular electric component circuit non-conductive, and no power supply voltages are applied to the connector connecting portion. In this state, a separating operation of the connector connecting portion is carried out. When the ignition key switch is set in a locking position, the control unit controls the power supply cutting portion to recover the vehicular electric component circuit to the conductive state, and the power supply voltage is applied to the connector connecting portion.

### BRIEF DESCRIPTION OF THE DRAWINGS

Fig. 1 is a circuit block diagram showing a vehicular electric component circuit of a conventional example.
Fig. 2A is a circuit block diagram showing a vehicular electric component circuit in fitting of a connector connecting portion (locking portion is in a locked state) according to a first embodiment of the present invention.
Fig. 2B is a circuit block diagram showing the vehicular electric component circuit in lock releasing of the connector connecting portion according to the first embodiment of the present invention.
Fig. 3 is a circuit block diagram showing a vehicular electric component circuit in fitting of each of a plurality of connector connecting portions (locking portion is in a lucked state) according to a second embodiment of the present invention.
Fig. 4 is a circuit block diagram showing the vehicular electric component circuit in lock releasing of the connector connecting portion according to the second embodiment of the present invention.
Fig. 5 is a circuit block diagram showing a vehicular electric component circuit in fitting of each of a plurality of connector connecting portions (locking portion is in a locked state) according to a third embodiment of the present invention.
Fig. 6 is a circuit block diagram, showing the vehicular electric component circuit in lock releasing of each of the plurality of connector connecting portions according to the third embodiment of the present invention.

### DESCRIPTION OF THE PREFERREED EMBODIMENTS

Next, description will be made for the preferred embodiments of the present invention with reference to the accompanying drawings.

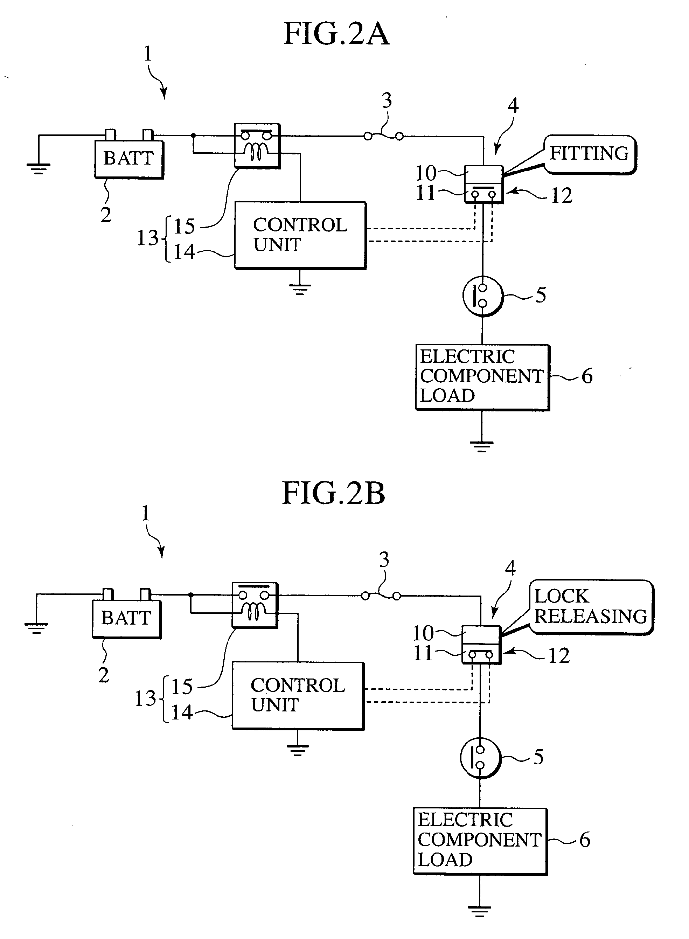

Fig. 2A and Fig. 2B show a vehicular electric component circuit of a power supply cut system for a vehicle according to a first embodiment of the present invention: Fig. 2A a circuit block diagram showing the vehicular electric component circuit in fitting of a connector connecting portion (locking portion is in a locked state); and Fig. 2B a circuit block diagram showing the vehicular electric component circuit in lock releasing of the connector connecting portion.

As shown in Fig. 2A and Fig. 2B, a vehicular electric component circuit 1 is mainly composed of a power supply 2 for supplying a predetermined power supply voltuge (42V), a fuse 3 for preventing conduction of an overcurrent, a connector connecting portion 4 for connecting wire harnesses with each other, a switch 5 for driving an electric component load 6, and the electric component load 6 operated by a power supply voltage.

The connector connecting portion 4 is composed of female and male terminal side connectors 10 and 11. The separated connectors 10 and 11 are fitted into each other by an inserting (fitting) operation, and the fitted connectors 10 and 11 are separated from each other by a pulling-away (separating) operation. This connector connecting portion 4 includes a locking portion (not shown) provided to lock the fitted connectors. Unless this locking portion is released, the connectors 10 and 11 cannot be separated trom each other. The connector connecting portion 4 also includes lock detecting means (cut signal inputting means) 12 provided to detect a locked or lock released state of the locking portion (not shown). The lock detecting means 12 includes a detection contact switch turned off in the locked state of the locking portion (not shown), and turned on in the lock released state of the same. When this lock detecting means 12 detects the lock released state, i.e., ON state, the vehicular electric component circuit 1 is made non-conductive by power supply cutting means 13.

The power supply cutting means 13 includes a control unit (control portion) 14 for monitoring an output of the lock detecting means 12 and controlling a power supply cutting portion 15, and the power supply cutting portion 15 provided in the vehicular electric component circuit 1 on an upper stream than the connector connecting portion 4 toward the power supply to make the vehicular electric component circuit 1 non-conductive. The power supply cutting portion 15 includes a relay circuit. With the relay circuit ON, the vehicular electric component circuit 1 is made conductive, and made non-conductive with the relay circuit OFF.

In the foregoing configuration, as shown in Fig. 2A, in a fitted state of the connector connecting portion 4, the power supply cutting portion 15 is turned on, making the vehicular electric component circuit 1 conductive. Accordingly, a power supply voltage is supplied from the power supply 2 to the electric component load 6.

As shown in Fig. 2B, when the locking portion (not shown) is released in order to separate the fitted connector connecting portion 4, the lock detecting means 12 detects this, and the control unit 14 controls the power supply cutting portion 15 to an OFF state, making the vehicular electric component circuit 1 non-conductive. No power supply voltages are supplied to the connector connecting portion 4 and, in this state, a separating operation of the connector connecting portion 4 is carried out. When a fitting operation of the connector connecting portion 4 is carried out in order to fit the separated connector connecting portion 4, and the locking portion (not shown) is locked, the lock detecting means 12 detects this, and the control unit 14 controls the power supply cutting portion 15 to an ON state, recovering the vehicular electric component circuit 1 to the conductive state. Accordingly, a power supply voltage can be supplied from the power supply 2 to the electric component load 6.

Thus, in handling of the connector connecting portion 4, in which the locking portion (not shown) of the connector connecting portion 4 is in a lock released state, no voltages are supplied from the power supply 2 to the connector connecting portion 4, making it possible to prevent occurrence of arc discharge and an electric shock.

In the described embodiment, the power supply cutting means 13 is composed of the control unit 14 and the power supply cutting portion 15. However, any type of power supply cutting means can be used as long as it can make the vehicular electric component circuit 1 non-conductive on the upper stream than the connector connecting portion 4 toward the power supply when the lock detecting means 12 of the connector connecting portion 4 detects lock releasing.

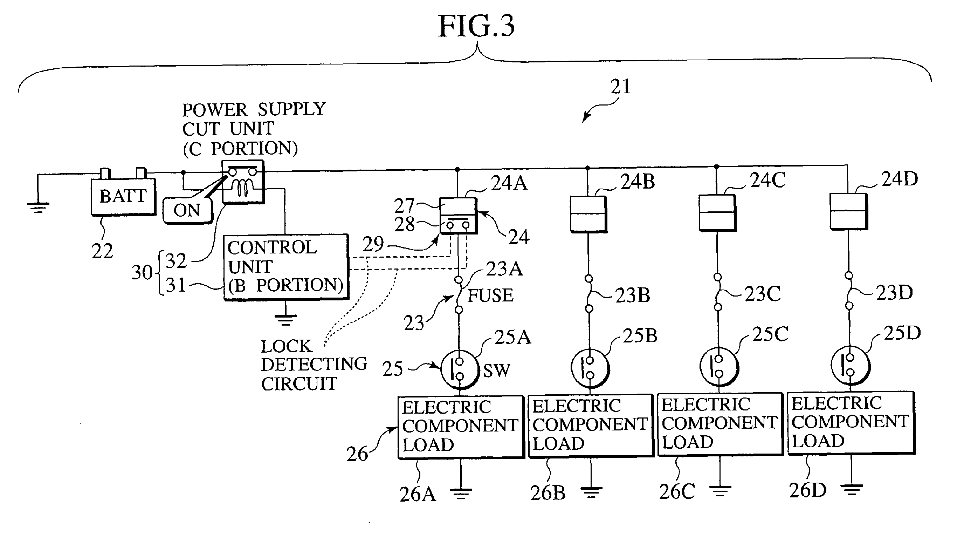

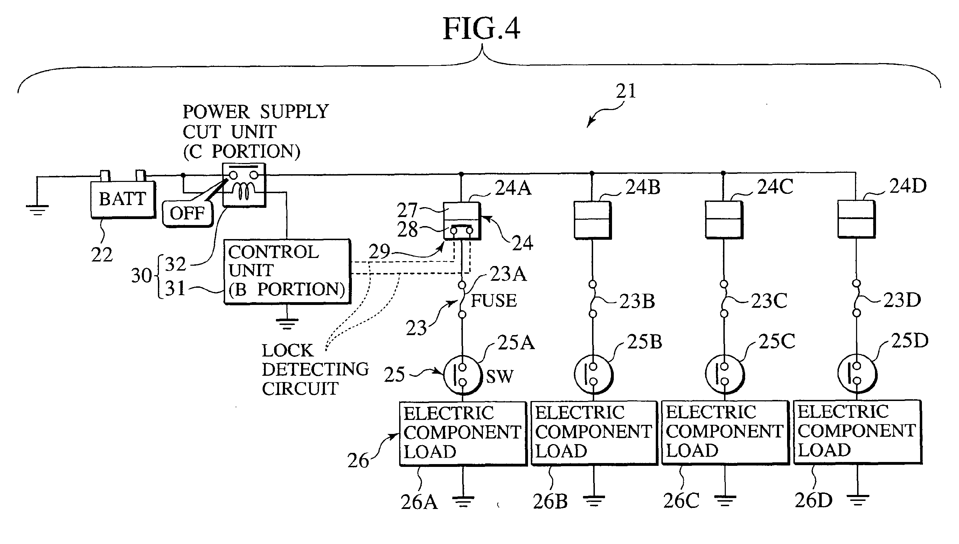

Fig. 3 and Fig. 4 show a vehicular electric component circuit of a power supply cut system for a vehicle according to a second embodiment of the present invention: Fig. 3 a circuit block diagram showing the vehicular electric component circuit in fitting of each of a plurality of connector connecting portions (locking portion is in a locked state); and Fig. 4 a circuit block diagram showing the vehicular electric component circuit in lock releasing of the connector connecting portion.

As shown in Fig. 3 and Fig. 4, a vehicular electric component circuit 21 is mainly composed of a power supply 22 for supplying a predetermined power supply voltage (42V), a fuse 23 for preventing conduction of an overcurrent, a connector connecting portion 24 for connecting wire harnesses with each other, a switch 25 for driving an electric component load 26, and the electric component load 26 operated by a power supply voltage.

The connector connecting portion 24 is composed of female and male terminal side connectors 27 end 28. The separated connectors 27 and 28 are fitted into each other by an inserting (fitting) operation, and the fitted connectors 27 and 28 are separated from each other by a pulling-away (separating) operation. This connector connecting portion 24 includes a locking portion (not shown) provided to lock the fitted connectors 27 and 28. Unless this locking portion is released, the connectors 27 and 28 cannot be separated from each other.

In the second embodiment, a plurality of connector connecting portion 24 are provided. Fuses 23A, 23B, 23C and 23D are connected to the plurality of connector connecting portions 24A, 24B, 24C and 24D respectively. Also, a plurality of electric component loads, i.e., a room lamp 26A, a head lamp 26B, a small lamp 26C, a cigarette lighter 26D, and the like are connected through switches 25A, 25B, 25C and 25D to the same.

At least one (connector connecting portion 24A in the embodiment) of the plurality of connector connecting portions 24A, 24B, 24C and 24D includes lock detecting means (cut signal inputting means) 29 provided to detect a locked or lock released state of the locking portion (not shown). The lock detecting means 29 includes a detection checking switch turned off in the locked sate of the locking portion (not shown), and turned on in the lock released state of the same. When this lock detecting means 29 detects the lock released state, i.e., ON state, the vehicular electric component circuit 21 is made non-conductive by power supply cutting means 30.

The power supply cutting means 30 includes a control unit (control portion) 31 for monitoring an output of the lock detecting means 29 and controlling a power supply cutting portion 32, and the power supply cutting portion 32 provided in the vehicular electric component circuit 21 on an upper stream than the connector connecting portion 24A toward the power supply to make the vehicular electric component circuit 21 non-conductive. The power supply cutting portion 32 includes a relay circuit. With the relay circuit ON, the vehicular electric component circuit 21 is made conductive, and made non-conductive with the relay circuit OFF.

In the foregoing configuration, as shown in Fig. 3, in a fitted state of the connector connecting portion 24A, the power supply cutting portion 32 is turned on, making the vehicular electric component circuit 21 conductive. Accordingly, a power supply voltage is supplied from the power supply 22 to the plurality of electric component loads, i.e., the room lamp 26A, the head lamp 26B, the small lamp 26C, the cigarette lighter 26D and the like.

As shown in Fig. 4, when the locking portion (not shown) is released in order to separate the fitted connector connecting portion 24A, the lock detecting means 29 detects this, and the control unit 31 controls the power supply cutting portion 32 to an OFF state, making the vehicular electric component circuit 21 non-conductive. No power supply voltages are supplied to the connector connecting portion 24A and the other connector connecting portions 24B, 24c and 24D and, in this state, separating operations ot the connector connecting portions 24A, 24B, 24C and 24D are carried out. When a fitting operation of the connector connecting portion 24A is carried out in order to fit the separated connector connecting portion 24A, and the locking portion (not shown) is locked, the lock detecting means 29 detects this, and the control unit 31 controls the power supply cutting portion 32 to an ON state, recovering the vehicular electric component circuit 21 to the conductive state. Accordingly, a power supply voltuge is supplied from the power supply 22 to the electric component loads, i.e., the room lamp 26A, the head lamp 26B, the small lamp 26C, the cigarette lighter 26D and the like.

In this case, for example, when the head lamp 26B is replaced by another, the connector connecting portion 24A connected to the room lamp 26A is disconnected to make the vehicular electric component circuit 21 non-conductive, making it possible to prevent occurrence of an arc discharge during replacing of the head lamp 26B. Accordingly, the head lamp 26B can be safely replaced by another.

Thus, in handling of the connector connecting portion 24A, in which the locking portion (not shown) of the connector connecting portion 24A is in a lock released state, no voltages are supplied from the power supply 22 to the connector connecting portion 24A and the other connector connecting portions 24B, 24C and 24D, making it possible to prevent occurrence of the arc discharge and an electric shock.

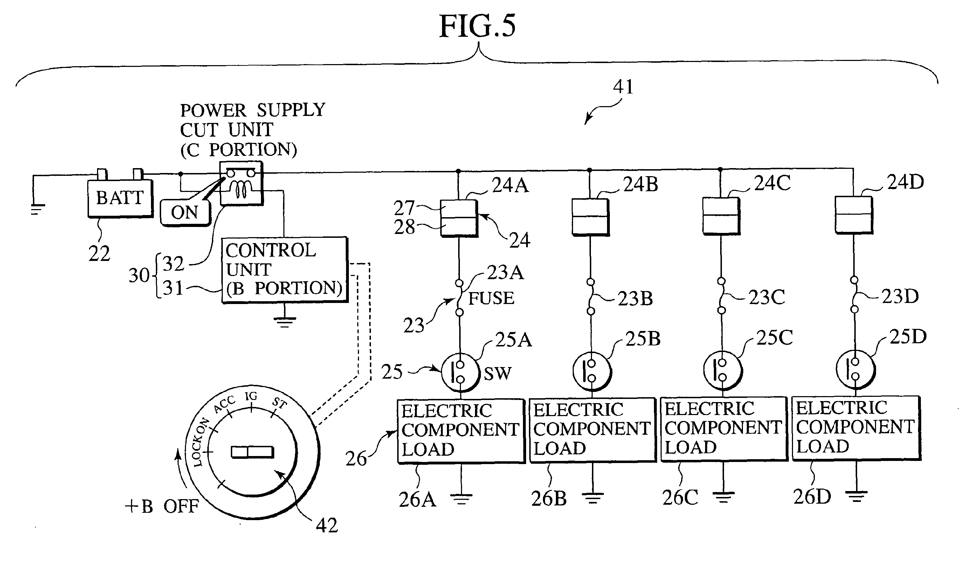

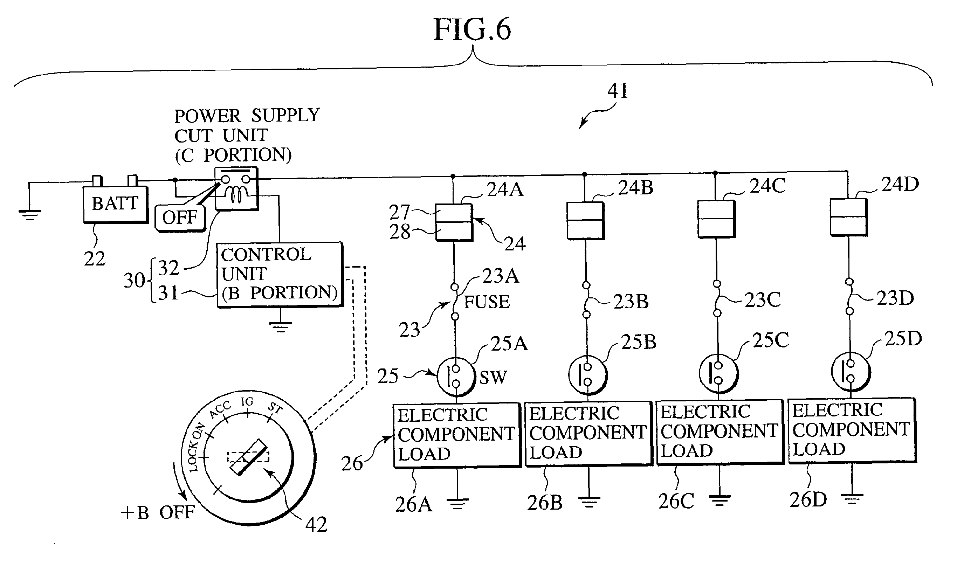

Fig. 5 and Fig. 6 show a vehicular electric component circuit of a power supply cut system for a vehicle according to a third embodiment of the present invention: Fig. 5 a circuit block diagram showing the vehicular electric component circuit in fitting of each of a plurality of connector connecting portions (locking portion is in a locked state); and Fig. 6 a circuit block diagram showing the vehicular electric component circuit in lock releasing of the connector connecting portion.

Components similar to those of the second embodiment are denoted by similar reterence numerals, and explained.

As shown in Fig. 5 and Fig. 6, the vehicular electric component circuit 41 is mainly composed of a power supply 22 for supplying a predetermined power supply voltage (42V), a fuse 23 for preventing conduction of an overcurrent, a connector connecting portion 24 for connecting wire harnesses with each other, a switch 25 for driving an electric component load 26, and the electric component load 26 operated by a power supply voltage.

The connector connecting portion 24 is composed of female and male terminal side connectors 27 and 28. The separated connectors 27 and 28 are fitted into each other by an inserting (fitting) operation, and the fitted connectors are separated from each other by a pulling-away (separating) operation.

In the third embodiment, a plurality of connector connecting portion 24 are provided. Fuses 23A, 23B, 23C and 23D are connected to the plurality of connector connecting portions 24A, 24B, 24C and 24D. Also, electric component loads 26, i.e., a room lamp 26A, a head lamp 26B, a small lamp 26C, a cigarette lighter 26D, and the like are connected through switches 25A, 25B, 25C and 25D to the same.

In addition, the third embodiment includes power supply cutting means 30 composed of a power supply cutting portion 32 provided in the vehicular electric component circuit 41 on an upper stream than the connector connecting portions 24A, 24B, 24C and 24D toward the power supply to make the vehicular electric component circuit 41 non-conductive, and a control unit (control portion) 31 for controlling the power supply cutting portion 32, and a vehicular ignition switch key (cut signal inputting means) 42 for entering a power supply cut signal to the control unit 31.

In the foregoing configuration, as shown in Fig. 5, when the ignition key switch 42 is in a locked position, the power supply cutting portion 32 is turned on, making the vehicular electric component circuit 41 conductive. Accordingly, a power supply voltage is supplied from the power supply 22 to the electric component loads 26, i.e., the room lamp 26A, the head lamp 26B, the small lamp 26C, the cigarette lighter 26D and the like.

As shown in Fig. 6, when the ignition key switch 42 is switched to a battery-OFF position us a power supply cutting-off position, a power supply cut signal is entered from the ignition key switch 42 to the control unit 31. The control unit 31 controls the puwer supply cutting portion 32 to an OFF state, making the vehicular electric component circuit 41 non-conductive. No power supply voltages are supplied to the connector connecting portions 24A, 24B, 24c and 24D and, in this state, separating operations of the connector connecting portions 24A, 24B, 24C and 24D are carried out.

## Claims

1. A power supply cut system for a vehicle, comprising:
power supply cutting means including a power supply cutting portion provided in a vehicular electric component circuit on an upper stream than a connector connecting portion toward a power supply to make the vehicular electric component circuit non-conductive, and a control unit for controlling the power supply cutting porlion; and
cut signal inputting means for entering a power supply cut signal to the control unit in a connected or disconnected state of the connector connecting portion.

2. The power supply cut system according to claim 1, wherein the connector connecting portion includes a locking portion, and lock detecting means provided to detect a locked or lock released state of the locking portion and, when the lock detecting means detects the lock released state, the power supply cutting means makes the vehicular electric component circuit non-conductive.

3. The power supply cut system according to claim 2, wherein a plurality of connector connecting portions are provided, at least one of the plurality of connector connecting portions includes the lock detecting means and, when the lock detecting means detects the lock released state, the power supply cutting means makes the vehicular electric component circuit non-conductive on the upper stream than the connector connecting portion toward the power supply, and cuts off power supply to the other connector connecting portions.

4. The power supply cut according to claim 1, wherein the cut signal inputting means is a vehicular ignition key switch for entering a power supply cut signal outputted from a power supply cutting position to the control unit.
